# EUROPEAN PATENT APPLICATION

(11) **EP 3 960 906 A1**
(43) Date of publication of application: **02.03.2022**
(21) Application number: 20795943.8
(22) Date of filing: 09.03.2020
(51) Int. Cl.: C25B 13/04, H01M 4/86, C25B 1/10, C25B 9/10, C25B 11/04, C25B 11/06, H01M 8/04, H01M 8/04701, H01M 8/12, H01M 8/1213, H01M 8/1253, H01M 8/126

(54) **MEMBRANE ELECTRODE ASSEMBLY, SOLID OXIDE-TYPE FUEL CELL, AND ELECTROCHEMICAL DEVICE**

(30) Priority: 26.04.2019 JP 2019086176; 28.08.2019 JP 2019155385
(71) Applicant: Panasonic Intellectual Property Management Co., Ltd., Osaka-shi, Osaka 540-6207 (JP)
(72) Inventor: MIKAMI, Yuichi, Osaka-shi, Osaka 540-6207 (JP); GOTO, Takehito, Osaka-shi, Osaka 540-6207 (JP); ONUMA, Shigenori, Osaka-shi, Osaka 540-6207 (JP); MURASE, Hideaki, Osaka-shi, Osaka 540-6207 (JP); KUROHA, Tomohiro, Osaka-shi, Osaka 540-6207 (JP)
(74) Representative: Grünecker Patent- und Rechtsanwälte PartG mbB
(86) International application number: PCT/JP2020/010048
(87) International publication number: WO 2020/217743

(57) **Abstract**

A membrane electrode assembly according to the present disclosure includes an electrolyte membrane containing a proton conductive oxide and an electrode containing a lanthanum strontium cobalt iron composite oxide located on the electrolyte membrane, wherein, in the electrode, the ratio of the number of moles of cobalt to the sum of the number of moles of cobalt and the number of moles of iron is 0.35 or more and 0.6 or less.

## Description

### Technical Field

The present disclosure relates to a membrane electrode assembly, a solid oxide fuel cell, and an electrochemical device.

### Background Art

For example, solid oxide fuel cells, water electrolysis cells, and steam electrolysis cells are known as electrochemical devices that include a membrane electrode assembly, which includes an electrode and an electrolyte membrane including a solid electrolyte composed of a solid oxide. Oxide ion (O²⁻) conductors exemplified by stabilized zirconia are widely used in solid electrolytes of electrochemical devices. The ionic conductivity of oxide ion conductors decreases with decreasing temperature. Thus, for example, it is desirable that the operating temperature of a solid oxide fuel cell containing stabilized zirconia in a solid electrolyte be 700°C or more. It is particularly desirable that the operating temperature be 700°C or more and 1000°C or less.

In solid oxide fuel cells containing stabilized zirconia in a solid electrolyte, lanthanum strontium cobalt iron composite oxides are used as the most common air electrode materials. These are represented by the composition formula of La₁₋ₘSrₘCoₙFe₁₋ₙO_{3-δ} (0 < m < 1, 0 < n < 1, δ denotes oxygen deficiency, 0 ≤ δ ≤ 0.5), and m = 0.4 and n = 0.2, that is, La_{0.6}Sr_{0.4}Co_{0.2}Fe_{0.8}O_{3-δ} is preferred. This is because, during operation at 700°C or more, the electrode reaction (O₂ + 4e⁻→ 2O²⁻) at the air electrode has small reaction resistance, which increases the power generation efficiency, the material is relatively stable even at high temperatures, and the difference in thermal expansion coefficient from the solid electrolyte is small, so that the electrode can be prevented from peeling off during temperature increase and decrease caused by starting or stopping.

When the operating temperature of electrochemical devices is as high as 700°C or more, however, there is the problem of increased production costs. More specifically, when the operating temperature is as high as 700°C or more, the periphery of an electrochemical device must be covered with a thick high-performance heat-insulating material. This increases production costs. Furthermore, a system including the electrochemical device requires an expensive special heat-resistant metal as a constituent, which also increases the production costs of the entire system.

Furthermore, when the system is started or stopped, a difference in thermal expansion of constituents is likely to cause cracking and lowers the reliability of the system. There also the problems of longer start times and increased energy required for starting.

Thus, a decrease in the operating temperature of an electrochemical device, such as a solid oxide fuel cell, that includes a solid electrolyte composed of a solid oxide is one of main objects in the practical application of the electrochemical device. Thus, attention is being given to solid oxide fuel cells including a proton conductor in a solid electrolyte that can operate at 600°C or less, particularly at 350°C or more and 600°C or less.

In a solid oxide fuel cell including a proton conductor in a solid electrolyte, water vapor is generated by a reaction (O₂ + 4H⁺ + 4e⁻ → 2H₂O) at the air electrode during power generation. Thus, the effects of water vapor at the air electrode should be considered.

For example, Non-patent Literature 1 mentions the stability of a lanthanum strontium cobalt iron composite oxide or a lanthanum strontium cobalt composite oxide used as an air electrode material against water vapor in the air. More specifically, it is mentioned that the presence of water vapor in the air causes decomposition of the lanthanum strontium cobalt iron composite oxide and the lanthanum strontium cobalt oxide. In particular, the stability against water vapor of a lanthanum strontium cobalt oxide with a high Co content is significantly reduced. Citation List

### Non Patent Literature

NPL 1: I. Kivi et. al., "Influence of humidified synthetic air feeding conditions on the stoichiometry of (La1-xSrx)yCo03-δ and La0.6Sr0.4Co0.2Fe0.803-δ cathodes under applied potential measured by electrochemical in situ high-temperature XRD method" J Solid State Electrochem, 2017, 21, 361-369

### Summary of Invention

### Technical Problem

However, membrane electrode assemblies including an electrode and an electrolyte membrane containing a proton conductive solid electrolyte have not been sufficiently studied on the reaction efficiency and the stability against water vapor at an operating temperature of 600°C or less.

Accordingly, the present disclosure provides a membrane electrode assembly, a solid oxide fuel cell, and an electrochemical device with high reaction efficiency and stability against water vapor at the operating temperature of 600°C or less.

### Solution to Problem

A membrane electrode assembly according to one aspect of the present disclosure includes an electrolyte membrane containing a proton conductive oxide and an electrode containing a lanthanum strontium cobalt iron composite oxide located on the electrolyte membrane, wherein, in the electrode, the ratio of the number of moles of cobalt to the sum of the number of moles of cobalt and the number of moles of iron is 0.35 or more and 0.6 or less.

A solid oxide fuel cell according to one aspect of the present disclosure includes a membrane electrode assembly that includes an electrolyte membrane containing a proton conductive oxide and an electrode containing a lanthanum strontium cobalt iron composite oxide located on the electrolyte membrane, wherein the ratio of the number of moles of cobalt to the sum of the number of moles of cobalt and the number of moles of iron in the electrode is 0.35 or more and 0.6 or less.

An electrochemical device according to one aspect of the present disclosure includes a membrane electrode assembly that includes an electrolyte membrane containing a proton conductive oxide and an electrode containing a lanthanum strontium cobalt iron composite oxide located on the electrolyte membrane, wherein the ratio of the number of moles of cobalt to the sum of the number of moles of cobalt and the number of moles of iron in the electrode is 0.35 or more and 0.6 or less.

### Advantageous Effects of Invention

The present disclosure is configured as described above and has the advantages of high reaction efficiency and stability against water vapor at the operating temperature of 600°C or less.

### Brief Description of Drawings

[Fig. 1] Fig. 1 is a schematic cross-sectional view of a membrane electrode assembly in an electrochemical device according to a first embodiment of the present disclosure.
[Fig. 2] Fig. 2 is a schematic cross-sectional view of a membrane electrode assembly in an electrochemical device according to a second embodiment of the present disclosure.
[Fig. 3] Fig. 3 is a graph of X-ray diffractometry measurements of LSCFs according to Examples 2 and 3 of the present disclosure and the LSCFs according to Comparative Examples 1 to 4.
[Fig. 4] Fig. 4 is a Cole-Cole plot of an example of an alternating-current impedance measurement in an example of the present disclosure.
[Fig. 5] Fig. 5 is a graph showing the relationship between the mole ratio of Co to the sum of the numbers of moles of Co and Fe and reaction resistance at air electrodes according to Examples 1 to 3 and Comparative Examples 1 to 4 of the present disclosure.

### Description of Embodiments

### Underlying Knowledge Forming Basis of the Present Disclosure

When a membrane electrode assembly containing stabilized zirconia as an electrolyte membrane is used at an operating temperature of 600°C, the electrolyte membrane has an increased ohmic resistance. Thus, for example, a solid oxide fuel cell including the membrane electrode assembly has a decrease in power generation efficiency. This is because oxide ion conduction in the stabilized zirconia has a high activation energy, and oxide ion conductivity decreases significantly in the temperature range of 600°C or less.

Furthermore, in a solid oxide fuel cell including a membrane electrode assembly containing stabilized zirconia as an electrolyte membrane, a typical conventional air electrode La_{0.6}Sr_{0.4}Co_{0.2}Fe_{0.8}O_{3-δ} (δ denotes oxygen deficiency. 0 ≤ δ ≤ 0.5) during operation at 600°C has a higher reaction resistance than during operation at 700°C and has a decrease in power generation efficiency.

When the voltage is 1.0 V and the current density is 0.2 A/cm² or more in the open circuit state without the application of electric current in a solid oxide fuel cell, the actual voltage during operation is 0.7 V or more, and the electrolyte has an ohmic resistance of 0.1 Ωcm², the reaction resistance at the air electrode should be less than 1.4 Ωcm² to achieve high power generation efficiency.

Thus, it has been proposed to use a proton conductor as a material for an electrolyte membrane that can reduce ohmic resistance at the operating temperature of 600°C or less. Among proton conductors, barium zirconate oxides, barium cerate oxides, and barium zirconate cerate oxides are known to have high proton conductivity. For example, BaZr_{0.8}Y_{0.2}O₃ or BaZr_{0.8}Yb_{0.2}O₃ has a high proton conductivity of 1.0 x 10⁻² S/cm or more at 600°C.

The stability against water vapor of an electrode is important in a membrane electrode assembly including a proton conductor in an electrolyte membrane. For example, when a solid oxide fuel cell includes a membrane electrode assembly including a proton conductor in an electrolyte membrane, water vapor is generated by a reaction (O₂ + 4H⁺ + 4e⁻ → 2H₂O) at the air electrode during power generation. For example, when a solid oxide fuel cell has an air utilization of 30% during power generation, the air exhausted from the solid oxide fuel cell has a water vapor concentration of approximately 12%. The water vapor concentration may be even higher at the local site of the electrode reaction. For example, when the oxygen in the air (21% by volume) is completely converted into water vapor by the reaction of O₂ + 4H⁺ 4e⁻ → 2H₂O, the water vapor in the exhausted air may constitute approximately 35% by volume. Thus, in a membrane electrode assembly including a proton conductor in an electrolyte membrane, the electrode is exposed to the air with a high water vapor concentration. Thus, an electrode material with low stability against water vapor may result in the decomposition of the electrode.

Non-patent Literature 1 discloses the effects on humidified air of compositions used for air electrode materials, such as (La_{0.6}Sr_{0.4})ₓCoO_{3-δ} (0.99 ≤ x ≤ 1.01, 0 ≤ δ ≤ 0.5) and La_{0.6}Sr_{0.4}Co_{0.2}Fe_{0.8}O_{3-δ} (0 ≤ δ ≤ 0.5). In other words, Non-patent Literature 1 reports the effects of water vapor on air electrode materials assuming the water vapor concentration in the normal air. However, Non-patent Literature 1 does not suggest the effects on electrode materials under the operating conditions of a membrane electrode assembly including a proton conductor in an electrolyte membrane (for example, 600°C and a high water vapor concentration (for example, 35% by volume of water vapor in the air)).

Thus, the present inventors have extensively studied a membrane electrode assembly with both high reaction efficiency and stability against water vapor at the operating temperature of 600°C or less. The stability against water vapor means the property that the composition does not change even under highly humidified conditions. More specifically, a substance in an electrode (hereinafter also referred to as an "air electrode") may react with water at 600°C or less and under highly humidified conditions and may produce a decomposition product. This may change the composition of the electrode.

More specifically, a membrane electrode assembly studied includes an electrolyte membrane containing a proton conductor and an electrode capable of reducing reaction resistance while maintaining high stability against water vapor. The ratio of the number of moles of cobalt (Co) to the sum of the number of moles of cobalt (Co) and the number of moles of iron (Fe) at which the electrode can have a reduced reaction resistance while maintaining high stability against water vapor at the operating temperature of 600°C or less was shown in a lanthanum strontium cobalt iron composite oxide.

The findings of the present inventors have not been shown and indicate a membrane electrode assembly, a solid oxide fuel cell, and an electrochemical device with a novel structure. The present disclosure more specifically provides the following aspects.

A membrane electrode assembly according to a first aspect of the present disclosure includes an electrolyte membrane containing a proton conductive oxide and an electrode containing a lanthanum strontium cobalt iron composite oxide located on the electrolyte membrane, wherein, in the electrode, the ratio of the number of moles of cobalt to the sum of the number of moles of cobalt and the number of moles of iron is 0.35 or more and 0.6 or less.

In the above structure, in which, in the electrode, the ratio of the number of moles of cobalt to the sum of the number of moles of cobalt and the number of moles of iron is 0.35 or more and 0.6 or less, it is possible to reduce reaction resistance to improve reaction efficiency (that is, power generation efficiency) and also possible to have high stability against water vapor at the operating temperature of a solid electrolyte fuel cell including a proton conductor in a solid electrolyte, for example, at 600°C or less.

In a membrane electrode assembly according to a second aspect of the present disclosure, the electrolyte membrane and the electrode in the first aspect may be in contact with each other.

Such a structure in which the electrolyte membrane is in contact with the electrode can reduce reaction resistance and improve reaction efficiency.

In a membrane electrode assembly according to a third aspect of the present disclosure, the electrolyte membrane in the first or second aspect may contain at least one compound selected from the group consisting of BaZr₁₋ₓ₁M1ₓ₁O_{3-γ}, BaCe₁₋ₓ₂M2ₓ₂O_{3-γ}, and BaZr_{1-x3-y3}Ceₓ₃M3_{y3}O_{3-γ}, wherein M1, M2, and M3 independently denote at least one element selected from the group consisting of La, Pr, Nd, Pm, Sm, Eu, Gd, Tb, Dy, Ho, Er, Tm, Yb, Y, Sc, Mn, Fe, Co, Ni, Al, Ga, In, and Lu, x1 satisfies 0 < x1 < 1, x2 satisfies 0 < x2 < 1, x3 satisfies 0 < x3 < 1, and y3 satisfies 0 < y3 < 1. γ denotes oxygen deficiency and satisfies 0 < γ ≤ 0.5.

In such a structure, the electrolyte membrane has high proton conductivity and can reduce the ohmic resistance of the membrane electrode assembly even in the operating temperature range of 600°C or less. Thus, when the membrane electrode assembly is used as a solid oxide fuel cell, the power generation efficiency can be improved even in the operating temperature range of 600°C or less.

In a membrane electrode assembly according to a fourth aspect of the present disclosure, the electrolyte membrane in the third aspect may be a compound represented by BaZr₁₋ₓ₁Ybₓ₁O_{3-γ}.

In such a structure, the electrolyte membrane has high proton conductivity and high carbon dioxide durability. Thus, when the membrane electrode assembly is used as a solid oxide fuel cell, the power generation efficiency can be improved, and stability against carbon dioxide can be improved, even in the operating temperature range of 600°C or less.

In a membrane electrode assembly according to a fifth aspect of the present disclosure, the electrode in any one of the first to fourth aspects may be an air electrode.

In such a structure, the air electrode in the membrane electrode assembly can reduce reaction resistance during the electrode reaction and at the same time can have high stability against water vapor even when exposed to high water vapor concentration during the electrode reaction. Thus, it is possible to have high reaction efficiency and stability against water vapor at the operating temperature of 600°C or less.

A solid oxide fuel cell according to a sixth aspect of the present disclosure includes a membrane electrode assembly that includes an electrolyte membrane containing a proton conductive oxide and an electrode containing a lanthanum strontium cobalt iron composite oxide located on the electrolyte membrane, wherein, in the electrode, the ratio of the number of moles of cobalt to the sum of the number of moles of cobalt and the number of moles of iron is 0.35 or more and 0.6 or less.

The solid oxide fuel cell with this structure can have high power generation efficiency and stability against water vapor at the operating temperature of 600°C or less.

An electrochemical device according to a seventh aspect of the present disclosure includes a membrane electrode assembly that includes an electrolyte membrane containing a proton conductive oxide and an electrode containing a lanthanum strontium cobalt iron composite oxide located on the electrolyte membrane, wherein, in the electrode, the ratio of the number of moles of cobalt to the sum of the number of moles of cobalt and the number of moles of iron is 0.35 or more and 0.6 or less.

The electrochemical device with this structure can have high reaction efficiency and stability against water vapor at the operating temperature of 600°C or less.

Embodiments of the present disclosure are described below with reference to the accompanying drawings.

The following embodiments are general or specific embodiments. The numerical values, shapes, materials, components, and arrangement and connection of the components in the following embodiments are only examples and are not intended to limit the present disclosure. Among the components in the following embodiments, components not described in the independent claims are described as optional components.

The accompanying figures are schematic figures and are not necessarily precise figures. Thus, for example, the scale of each figure is not necessarily the same. Like parts are denoted by like reference numerals throughout the figures. Parts once described are not described again or are simply described thereafter.

In the present specification, terms describing the relationship between elements, such as parallel, terms describing the shape of an element, such as rectangular, and numerical ranges not only refer to their exact meanings but also to substantially the equivalent meanings. For example, numerical ranges tolerate variations of several percent. The term "thickness direction", as used herein, refers to a direction in which an electrode and an electrolyte membrane are stacked.

### (First Embodiment)

### [Structure of Membrane Electrode Assembly]

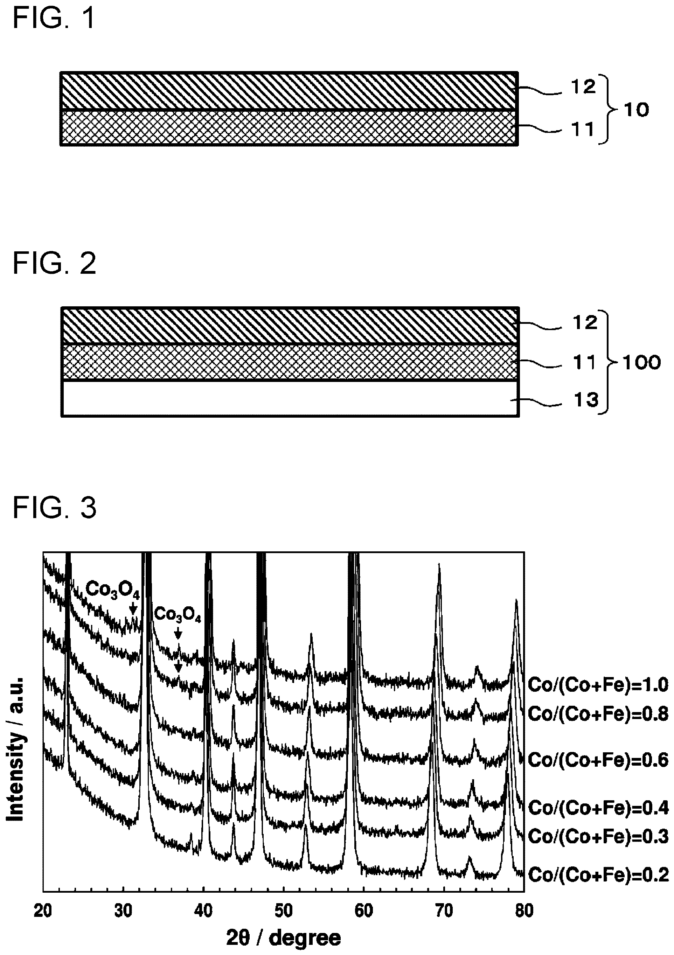

Fig. 1 is a schematic cross-sectional view of a membrane electrode assembly 10 in an electrochemical device according to a first embodiment of the present disclosure. Fig. 1 illustrates a cross section of the membrane electrode assembly 10 in the thickness direction. As illustrated in Fig. 1, the membrane electrode assembly 10 includes an electrolyte membrane 11, which contains a solid electrolyte composed of a proton conductive oxide, and an air electrode 12 located on the electrolyte membrane 11. Thus, the membrane electrode assembly 10 has a multilayer structure including the electrolyte membrane 11 and the air electrode 12 arranged in contact with each other.

Examples of electrochemical devices including the membrane electrode assembly 10 include solid oxide fuel cells, water electrolysis cells, steam electrolysis cells, and electrochemical reactors.

### [Electrolyte Membrane]

As described above, the electrolyte membrane 11 contains a proton conductive solid electrolyte. The solid electrolyte can be represented by any one of the following composition formulae (1) to (3).

BaZr₁₋ₓ₁M1ₓ₁O_{3-γ} (1)

BaCe₁₋ₓ₂M2ₓ₂O_{3-γ} (2)

BaZr_{1-x3-y3}Ceₓ₃M3_{y3}O_{3-γ} (3)

M1, M2, and M3 independently denote at least one element selected from the group consisting of La, Pr, Nd, Pm, Sm, Eu, Gd, Tb, Dy, Ho, Er, Tm, Yb, Y, Sc, Mn, Fe, Co, Ni, Al, Ga, In, and Lu. M1, M2, and M3 may be referred to as dopants. x1, x2, x3, and y3 satisfy the following conditions (a) to (d), respectively.

0 < x1 < 1 (a)

0 < x2 < 1 (b)

0 < x3 < 1 (c)

0 < y3 < 1 (d)

0 < γ ≤ 0.5 (e)

Among these solid electrolytes, a compound with the composition formula (1) represented by BaZr₁₋ₓ₁M1ₓ₁O_{3-γ} without Ce (hereinafter also referred to as a "BZM") has high stability against carbon dioxide.

In the composition formulae (1) to (3), γ denotes oxygen deficiency in the composition and changes with the oxidation number of the dopant and the mixture ratios x1, x2, x3, and y3. O of H₂O corresponding to the oxygen deficiency γ can enter an oxygen-deficient site, and γ may be 0 at minimum. γ satisfies 0 < γ ≤ 0.5.

The performance of the solid electrolyte, that is, the proton conductivity tends to be improved as x1, x2, x3, and y3 in the composition formulae (1) to (3) increase. The crystal structure of the solid electrolyte tends to be stabilized as x1, x2, x3, and y3 decrease.

For example, as x3 in the composition formula (3) increases, the performance is improved, but the stability against carbon dioxide decreases.

When x1 and x2 in the composition formulae (1) and (2) are the same, the composition formula (2) generally has more improved performance. However, the stability against carbon dioxide decreases.

To improve both the performance (proton conductivity) and the structural stability of the solid electrolyte, in the composition formulae (1) to (3), 0.05 < x1 < 0.3, 0.05 < x2 < 0.3, and 0.05 < x3 < 0.3 are satisfied, and preferably 0.1 ≤ x1 ≤ 0.2, 0.1 ≤ x2 ≤ 0.2, and 0.1 ≤ x3 ≤ 0.2 are satisfied. More preferably, x1 = 0.2, x2 = 0.2, and x3 = 0.2 are satisfied. In the composition formula (1), M1 may be at least one element selected from the group consisting of Y, Tm, Yb, and Lu in terms of proton conductivity. In the composition formula (1), M1 may be at least one element selected from the group consisting of Lu and Yb in terms of proton conductivity and less impurities formation during sintering in the presence of a compound containing Ni. Thus, the solid electrolyte may be represented by the composition formula (1) in which M1 is Yb and x = 0.2, that is, BaZr_{0.8}Yb_{0.2}O_{3-γ}. When the solid electrolyte is BaZr_{0.8}Yb_{0.2}O_{3-γ}, the membrane electrode assembly 10 can have improved power generation efficiency and durability. For example, a BZM represented by the composition formula (1) in which the element M is Yb and the mole ratio of Zr to Yb is 8:2 has a proton conductivity of approximately 0.011 S/cm at 600°C.

The thickness of the electrolyte membrane 11 may be minimized to decrease the ohmic resistance (that is, IR resistance) of the electrolyte membrane 11.

### [Air Electrode]

The air electrode 12 is composed of an oxide ion/electron mixed conductor material. The oxide ion/electron mixed conductor material is a lanthanum strontium cobalt iron composite oxide (hereinafter also referred to as an "LSCF"), and the ratio of the number of moles of Co to the sum of the number of moles of Co and the number of moles of Fe is 0.4 or more and 0.6 or less. The air electrode 12 may be composed only of the LSCF or may be composed of the LSCF and another oxide ion/electron mixed conductor material. Furthermore, for example, the air electrode 12 may contain a material (hereinafter referred to as an electrolyte material) constituting the solid electrolyte of the electrolyte membrane 11, such as BZM.

When the air electrode 12 is used as an air electrode of a solid oxide fuel cell, for example, a reaction that electrochemically reduces oxygen in the gas phase occurs. Thus, the air electrode 12 may be a porous structure to provide the diffusion path of oxygen and promote the reaction. For example, the porous structure may have a porosity in the range of 20% to 50% by volume measured by the Archimedes' principle or the mercury intrusion method.

The LSCF can be represented by the following composition formula (4).

La₁₋ₘSrₘCoₙFe₁₋ₙO_{3-δ} (4)

In the composition formula (4), n is in the range of 0.4 ≤ n ≤ 0.6. This can prevent the formation of a decomposition product (for example, a Co oxide) at the air electrode 12 by a reaction with water, for example, in the operating temperature range of the solid oxide fuel cell with proton conductivity (that is, in the temperature range of 600°C or less) and under highly humidified conditions where water vapor in the air constitutes approximately 35% by volume. Furthermore, this can decrease the reaction resistance of the electrode reaction at the air electrode 12 and increase the power generation efficiency.

In the composition formula (4), m is preferably in the range of 0 ≤ m ≤ 0.5, particularly preferably 0.4. δ in the composition formula (4) denotes oxygen deficiency. δ can vary in the range of 0 or more and 0.5 or less depending on the mole ratio of Sr (that is, m), the mole ratio of Co (that is, n), and the oxidation numbers of Co and Fe.

As illustrated in Fig. 1, in the membrane electrode assembly 10 according to the first embodiment including the electrolyte membrane 11 and the air electrode 12, the air electrode 12 is located on a main surface of the electrolyte membrane 11.

Thus, the membrane electrode assembly 10 can decrease the reaction resistance and improve the reaction efficiency of the electrochemical device. In particular, the air electrode 12 has high stability against water vapor and low reaction resistance, and therefore the membrane electrode assembly 10 can have both high reaction efficiency and high stability against water vapor.

### (Second Embodiment)

A membrane electrode assembly 100 in an electrochemical device according to a second embodiment of the present disclosure is described below with reference to Fig. 2. The second embodiment mainly describes differences from the first embodiment, and like or corresponding components are denoted by like reference numerals and letters throughout the figures and may not be described again.

Fig. 2 is a schematic cross-sectional view of the membrane electrode assembly 100 in the electrochemical device according to the second embodiment of the present disclosure. Fig. 2 illustrates a cross section of the membrane electrode assembly 100 in the thickness direction. As illustrated in Fig. 2, the membrane electrode assembly 100 according to the second embodiment further includes a fuel electrode 13 in the structure of the membrane electrode assembly 10 according to the first embodiment. More specifically, the membrane electrode assembly 10 includes the air electrode 12 on one main surface of the electrolyte membrane 11 and the fuel electrode 13 on the other main surface. In other words, in the electrochemical device, the air electrode 12, the electrolyte membrane 11, and the fuel electrode 13 are stacked in this order.

The membrane electrode assembly 100 according to the second embodiment has the same structure as the membrane electrode assembly 10 according to the first embodiment except for the fuel electrode 13. Thus, the same components as in the membrane electrode assembly 10 are denoted by the same reference numerals and are not described in detail here.

Although the membrane electrode assembly 100 in Fig. 2 includes the electrolyte membrane 11 on the fuel electrode 13 and the air electrode 12 on the electrolyte membrane 11, the membrane electrode assembly 100 may have another structure. For example, another layer formed of an ion conductive material different from the electrolyte membrane 11 may be formed between the fuel electrode 13 and the electrolyte membrane 11.

### [Fuel Electrode]

The fuel electrode 13 is an electrode where an electrochemical oxidation occurs. For example, the electrode is composed of a cermet of Ni and an electrolyte material.

When the fuel electrode 13 is used as a fuel electrode of a solid oxide fuel cell, for example, a reaction that oxidizes hydrogen in the gas phase to protons occurs in the fuel electrode 13. Thus, to promote the oxidation reaction from hydrogen to protons, the fuel electrode 13 may be formed as a composite structure of Ni with electronic conductivity and hydrogen oxidation activity and an electrolyte material with proton conductivity. The fuel electrode 13 may be a porous structure to provide the diffusion path of a gas (for example, hydrogen). For example, the fuel electrode 13 may be a porous structure with a porosity in the range of 20% to 50% by volume measured by the Archimedes' principle or the mercury intrusion method.

When the electrochemical device including the membrane electrode assembly 100 is a solid oxide fuel cell, electricity is generated by supplying air to the side of the electrolyte membrane 11 on which the air electrode 12 is located and a gas containing hydrogen (that is, fuel) to the side of the electrolyte membrane 11 on which the fuel electrode 13 is located. Thus, when the electrochemical device including the membrane electrode assembly 100 is a solid oxide fuel cell, the electrolyte membrane 11 should be gas-tight.

As described above, the membrane electrode assembly 100 according to the second embodiment has a structure in which the air electrode 12, the electrolyte membrane 11, and the fuel electrode 13 are stacked in this order. Thus, like the membrane electrode assembly 100 according to the first embodiment, the membrane electrode assembly 100 according to the second embodiment can decrease the reaction resistance and improve the reaction efficiency of the electrochemical device. In particular, the air electrode 12 has high stability against water vapor and low reaction resistance, and therefore the membrane electrode assembly 100 can have both high reaction efficiency and high stability against water vapor.

Thus, when the electrochemical device including the membrane electrode assembly 100 is a solid oxide fuel cell, the solid oxide fuel cell can decrease the reaction resistance, improve the power generation efficiency, and have high stability against water vapor.

When the electrochemical device including the membrane electrode assembly 100 is a steam electrolysis cell, the steam electrolysis cell can decrease the reaction resistance, improve the electrolysis efficiency, and have high stability against water vapor.

When the membrane electrode assembly 100 according to the second embodiment is used in a solid oxide fuel cell, for example, the following fuel-cell system can be configured. The fuel-cell system includes a raw material supply path (not shown) for supplying a raw material, a reformer (not shown) for reforming the raw material flowing through the raw material supply path to generate a hydrogen-containing gas, and an air supply path (not shown) for supplying air (that is, an oxidant gas).

In the fuel-cell system, a raw material, such as a hydrocarbon gas, is supplied to the reformer from the outside through the raw material supply path. The reformer reforms the supplied raw material and produces a hydrogen-containing gas. The hydrogen-containing gas generated in the reformer is supplied to the fuel electrode 13 of the solid oxide fuel cell including the membrane electrode assembly 100. Alternatively, the hydrogen-containing gas may be directly supplied to the fuel electrode 13 from the outside through the raw material supply path without the reformer.

An oxidant gas is supplied from the outside through the air supply path to the air electrode 12 of the solid oxide fuel cell (the membrane electrode assembly 100). The solid oxide fuel cell (the membrane electrode assembly 100) generates electricity by an electrochemical reaction between hydrogen in the hydrogen-containing gas and oxygen in the oxidant gas supplied in this manner.

### EXAMPLES

Examples of the present disclosure (Examples 1 and 2) are described below. Examples 1 and 2 of the present disclosure are examples of the membrane electrode assembly 10 according to the first embodiment of the present disclosure and the membrane electrode assembly 100 according to the second embodiment of the present disclosure. The structures of the membrane electrode assembly 10 according to the first embodiment of the present disclosure and the membrane electrode assembly 100 according to the second embodiment of the present disclosure are not limited to the structures of these examples.

First, an air electrode according to Example 1 represented by the composition formula (5), an air electrode according to Example 2 represented by the composition formula (6), and an air electrode according to Example 3 represented by the composition formula (7) were prepared.

In each of the air electrodes according to Examples 1, 2, and 3, the ratio of the number of moles of Co to the sum of the number of moles of Co and the number of moles of Fe is 0.35 or more and 0.6 or less.

La_{0.6}Sr_{0.4}Co_{0.35}Fe_{0.65}O_{3-δ} (5)

La_{0.6}Sr_{0.4}Co_{0.4}Fe_{0.6}O_{3-δ} (6)

La_{0.6}Sr_{0.4}Co_{0.6}Fe_{0.4}O_{3-δ} (7)

Furthermore, an air electrode according to Comparative Example 1 represented by the following composition formula (8), an air electrode according to Comparative Example 2 represented by the composition formula (9), an air electrode according to Comparative Example 3 represented by the composition formula (10), and an air electrode according to Comparative Example 4 represented by the composition formula (11) were prepared.

La_{0.6}Sr_{0.4}Co_{0.2}Fe_{0.8}O_{3-δ} (8)

La_{0.6}Sr_{0.4}Co_{0.3}Fe_{0.7}O_{3-δ} (9)

La_{0.6}Sr_{0.4}Co_{0.8}Fe_{0.2}O_{3-δ} (10)

La_{0.6}Sr_{0.4}CoO_{3-δ} (11)

In each of the air electrodes according to Comparative Examples 1 to 4, the ratio of the number of moles of Co to the sum of the number of moles of Co and the number of moles of Fe is less than 0.35 or more than 0.6. In these composition formulae, δ denotes oxygen deficiency. δ satisfies 0 ≤ δ ≤ 0.5.

### (Method for Producing Air Electrode Material)

Next, a method for producing an air electrode material LSCF in Examples 1 to 3 and Comparative Examples 1 to 4 (LSC in Comparative Example 4) is described below.

### [Method for Producing Air Electrode Material according to Example 1]

The air electrode material (LSCF) according to Example 1 was prepared by a citrate complex method using La(NO₃)₃·6H₂O, Sr(NO₃)₂, Co(NO₃)₂·6H₂O, and Fe(NO₃)₃·9H₂O (each manufactured by Kanto Chemical Co., Inc.) as starting materials.

More specifically, 23.27 g of a La(NO₃)₃·6H₂O powder, 7.58 g of a Sr(NO₃)₂ powder, 9.12 g of a Co(NO₃)₂·6H₂O powder, and 23.52 g of an Fe(NO₃)₃·9H₂O powder were weighed. Then, each of the weighed powders was dissolved in distilled water, to which 34.42 g of citric acid monohydrate (manufactured by Kanto Chemical Co., Inc.) and 26.17 g of ethylenediaminetetraacetic acid (EDTA) (manufactured by Kanto Chemical Co., Inc.) were added. Subsequently, aqueous ammonia (28% by weight) (manufactured by Kanto Chemical Co., Inc.) was used to adjust the pH to 7. After the pH adjustment, the solvent was removed on a hot stirrer at 90°C. Subsequently, the mixture was heated to approximately 300°C and was finally subjected to main sintering at 1200°C in the air to produce an LSCF powder.

### [Method for Producing Air Electrode Material according to Example 2]

An air electrode material (LSCF) according to Example 2 was prepared in the same manner as the air electrode material according to Example 1 except that the amount of each powder serving as a starting material and the amounts of citric acid monohydrate and ethylenediaminetetraacetic acid (EDTA) added to distilled water in which the powders were dissolved were different.

In the air electrode material according to Example 2, the powders serving as starting materials were 23.25 g of the La(NO₃)₃·6H₂O powder, 7.58 g of the Sr(NO₃)₂ powder, 10.42 g of the Co(NO₃)₂·6H₂O powder, and 21.69 g of the Fe(NO₃)₃·9H₂O powder (each manufactured by Kanto Chemical Co., Inc.). Furthermore, 34.39 g of citric acid monohydrate (manufactured by Kanto Chemical Co., Inc.) and 26.16 g of ethylenediaminetetraacetic acid (EDTA) (manufactured by Kanto Chemical Co., Inc.) were used.

### [Method for Producing Air Electrode Material according to Example 3]

An air electrode material (LSCF) according to Example 3 was prepared in the same manner as the air electrode material according to Example 1 except that the amount of each powder serving as a starting material and the amounts of citric acid monohydrate and ethylenediaminetetraacetic acid (EDTA) added to distilled water in which the powders were dissolved were different.

In the air electrode material according to Example 3, the powders serving as starting materials were 23.19 g of the La(NO₃)₃·6H₂O powder, 7.55 g of the Sr(NO₃)₂ powder, 15.58 g of the Co(NO₃)₂·6H₂O powder, and 14.42 g of the Fe(NO₃)₃·9H₂O powder (each manufactured by Kanto Chemical Co., Inc.). Furthermore, 34.30 g of citric acid monohydrate (manufactured by Kanto Chemical Co., Inc.) and 26.08 g of ethylenediaminetetraacetic acid (EDTA) (manufactured by Kanto Chemical Co., Inc.) were used.

### [Method for Producing Air Electrode Material according to Comparative Example 1]

An air electrode material (LSCF) according to Comparative Example 1 was prepared in the same manner as the air electrode material according to Example 1 except that the amount of each powder serving as a starting material and the amounts of citric acid monohydrate and ethylenediaminetetraacetic acid (EDTA) added to distilled water in which the powders were dissolved were different.

In the air electrode material according to Comparative Example 1, the powders serving as starting materials were 23.32 g of the La(NO₃)₃·6H₂O powder, 7.60 g of the Sr(NO₃)₂ powder, 5.22 g of the Co(NO₃)₂·6H₂O powder, and 29.00 g of the Fe(NO₃)₃·9H₂O powder (each manufactured by Kanto Chemical Co., Inc.). Furthermore, 34.49 g of citric acid monohydrate (manufactured by Kanto Chemical Co., Inc.) and 26.19 g of ethylenediaminetetraacetic acid (EDTA) (manufactured by Kanto Chemical Co., Inc.) were used.

### [Method for Producing Air Electrode Material according to Comparative Example 2]

An air electrode material (LSCF) according to Comparative Example 2 was prepared in the same manner as the air electrode material according to Example 1 except that the amount of each powder serving as a starting material and the amounts of citric acid monohydrate and ethylenediaminetetraacetic acid (EDTA) added to distilled water in which the powders were dissolved were different.

In the air electrode material according to Comparative Example 2, the powders serving as starting materials were 23.28 g of the La(NO₃)₃·6H₂O powder, 7.59 g of the Sr(NO₃)₂ powder, 7.82 g of the Co(NO₃)₂·6H₂O powder, and 25.34 g of the Fe(NO₃)₃·9H₂O powder (each manufactured by Kanto Chemical Co., Inc.). Furthermore, 34.44 g of citric acid monohydrate (manufactured by Kanto Chemical Co., Inc.) and 26.19 g of ethylenediaminetetraacetic acid (EDTA) (manufactured by Kanto Chemical Co., Inc.) were used.

### [Method for Producing Air Electrode Material according to Comparative Example 3]

An air electrode material (LSCF) according to Comparative Example 3 was prepared in the same manner as the air electrode material according to Example 1 except that the amount of each powder serving as a starting material and the amounts of citric acid monohydrate and ethylenediaminetetraacetic acid (EDTA) added to distilled water in which the powders were dissolved were different.

In the air electrode material according to Comparative Example 3, the powders serving as starting materials were 23.12 g of the La(NO₃)₃·6H₂O powder, 7.53 g of the Sr(NO₃)₂ powder, 20.72 g of the Co(NO₃)₂·6H₂O powder, and 7.19 g of the Fe(NO₃)₃·9H₂O powder (each manufactured by Kanto Chemical Co., Inc.). Furthermore, 34.20 g of citric acid monohydrate (manufactured by Kanto Chemical Co., Inc.) and 26.01 g of ethylenediaminetetraacetic acid (EDTA) (manufactured by Kanto Chemical Co., Inc.) were used.

### [Method for Producing Air Electrode Material according to Comparative Example 4]

An air electrode material (LSC) according to Comparative Example 4 was prepared in the same manner as the air electrode material according to Example 1 except that the amount of each powder serving as a starting material and the amounts of citric acid monohydrate and ethylenediaminetetraacetic acid (EDTA) added to distilled water in which the powders were dissolved were different.

In the air electrode material according to Comparative Example 4, the powders serving as starting materials were 23.06 g of the La(NO₃)₃·6H₂O powder, 7.51 g of the Sr(NO₃)₂ powder, and 25.83 g of the Co(NO₃)₂·6H₂O powder (each manufactured by Kanto Chemical Co., Inc.). Furthermore, 34.11 g of citric acid monohydrate (manufactured by Kanto Chemical Co., Inc.) and 25.94 g of ethylenediaminetetraacetic acid (EDTA) (manufactured by Kanto Chemical Co., Inc.) were used.

### [Exposure test to water vapor of Air Electrode]

The LSCFs according to Examples 1 to 3 and the LSCFs according to Comparative Examples 1 to 4 prepared by the production method were subjected to an exposure test to water vapor, as described below.

First, the LSCF powders according to Examples 1 to 3 and the LSCF powders according to Comparative Examples 1 to 4 prepared in the "Method for Producing Air Electrode Material" were charged into a hollow (1 mm in thickness, 1 cm in diameter) of a quartz dish. The surface of each LSCF powder was then smoothed with a glass squeegee. The results of X-ray diffractometry measurement at room temperature were then analyzed and were used as standards before the test (that is, before the exposure test to water vapor). SmartLab manufactured by Rigaku Corporation was used for the X-ray diffractometry measurement. The X-ray radiation on a sample was a CuKα characteristic X-ray (wavelength: 1.5418 angstroms).

Next, the LSCF powders according to Examples 1 to 3 and the LSCF powders according to Comparative Examples 1 to 4 were left standing in a quartz tube with a gas flow path installed in a tubular furnace. The tubular furnace was heated such that the temperature near the LSCF powder was 600°C. A humidified gas containing 40% by volume of water vapor by bubbling synthetic air was passed through the gas flow path at 160 cc/min. This volume fraction of water vapor was slightly higher than the water vapor fraction (approximately 35%) when oxygen in the air (21% by volume) was entirely converted into water vapor by the reaction O₂ + 4H⁺ + 4e⁻ → 2H₂O.

After 1000 hours, the LSCF powder was subjected to X-ray diffractometry at room temperature. Measurement results after the exposure test to water vapor (that is, measurement results after the test) were obtained in this manner. The standards before the test were compared with the measurement results after the test. When a peak not attributable to the LSCF was detected in this comparison, it was determined that a decomposition product of the LSCF was produced. The following Table 1 and Fig. 3 show the presence or absence of a decomposition product after 1000 hours in the LSCFs according to Examples 1 to 3 and the LSCFs according to Comparative Examples 1 to 4. Fig. 3 is a graph of the X-ray diffractometry measurements of LSCFs according to Examples 2 and 3 of the present disclosure and the LSCFs according to Comparative Examples 1 to 4.

**[Table 1]**

| | Air electrode | | Solid electrolyte | Stability against water vapor of air electrode | Reaction resistance [Ωcm²] |
|---|---|---|---|---|---|
| | Composition formula | ratio of number of moles of cobalt to sum of number of moles of cobalt and number of moles of iron | | | |
| Comparative example 1 | La_{0.6}Sr_{0.4}Co_{0.2}Fe_{0.8}O_{3-δ} | 0.2 | BZYb: BaZr_{0.8}Yb_{0.2}O_{2.90} | O | 2.1 |
| Comparative example 2 | La_{0.6}Sr_{0.4}Co_{0.3}Fe_{0.7}O_{3-δ} | 0.3 | BZYb: BaZr_{0.8}Yb_{0.2}O_{2.90} | O | 1.8 |
| Example 1 | La_{0.6}Sr_{0.4}Co_{0.35}Fe_{0.65}O_{3-δ} | 0.35 | BZYb: BaZr_{0.8}Yb_{0.2}O_{2.90} | Unmeasured | 1.3 |
| Example 2 | La_{0.6}Sr_{0.4}Co_{0.4}Fe_{0.6}O_{3-δ} | 0.4 | BZYb: BaZr_{0.8}Yb_{0.2}O_{2.90} | O | 1.2 |
| Example 3 | La_{0.6}Sr_{0.4}Co_{0.4}Fe_{0.6}O_{3-δ} | 0.6 | BZYb: BaZr_{0.8}Yb_{0.2}O_{2.90} | O | 1.4 |
| Comparative example 3 | La_{0.6}Sr_{0.4}Co_{0.4}Fe_{0.6}O_{3-δ} | 0.8 | BZYb: BaZr_{0.8}Yb_{0.2}O_{2.90} | X detect Co₃O₄ | 1.3 |
| Comparative example 4 | La_{0.6}Sr_{0.4}CoO_{3-δ} | 1.0 | BZYb: BaZr_{0.8}Yb_{0.2}O_{2.90} | X detect Co₃O₄ | Unmeasured |

When the ratio of the number of moles of cobalt (Co) to the sum of the number of moles of cobalt (Co) and the number of moles of iron (Fe) was 0.2, 0.3, 0.4, or 0.6, no peaks indicating decomposition products other than the LSCFs were detected. When the ratio of the number of moles of cobalt (Co) to the sum of the number of moles of cobalt (Co) and the number of moles of iron (Fe) was 0.8 or 1.0, peaks of cobalt oxide (Co₃O₄) were detected (see arrows in Fig. 3).

These results show that those in which the ratio of Co to the sum of Co and Fe is 0.6 or less have high stability against water vapor at 600°C. By contrast, those in which the ratio of Co to the sum of Co and Fe is 0.8 or 1.0 were unstable against water vapor at 600°C.

### (Method for Producing Membrane Electrode Assembly)

Membrane electrode assemblies including the LSCFs according to Examples 1 to 3 and Comparative Examples 1 to 4 were produced by the following production method. These membrane electrode assemblies include an air electrode on one main surface of an electrolyte membrane and a fuel electrode on the other main surface of the electrolyte membrane. All the electrolyte membranes of the membrane electrode assemblies including the LSCFs according to Examples 1 to 3 and Comparative Examples 1 to 4 were formed of the same electrolyte material, which typically had a composition of BaZr_{0.8}Yb_{0.2}O_{2.9} (hereinafter referred to as a BZYb). All the fuel electrodes of the membrane electrode assemblies including the LSCFs according to Examples 1 to 3 and Comparative Examples 1 to 4 were also the same and were formed of a compound of BZYb and NiO.

### [Method for Producing Electrolyte Material]

First, a method for producing a BZYb green sheet material, which is an electrolyte material constituting the electrolyte membrane, is described below.

The BZYb was prepared by the citrate complex method using a Ba(NO₃)₂ powder (manufactured by Kanto Chemical Co., Inc.), a ZrO(NO₃)₂·2H₂O powder (manufactured by Kanto Chemical Co., Inc.), and a Yb(NO₃)₃·xH₂O (manufactured by Kojundo Chemical Laboratory Co., Ltd.) powder as starting materials.

### (Preparation of Electrolyte Powder)

First, an electrolyte powder is described. More specifically, first, for BZYb, 42.43 g of a Ba(NO₃)₂ powder and 34.71 g of a ZrO(NO₃)₂·2H₂O powder were dissolved in distilled water. Furthermore, 187 mL of an aqueous solution with a Yb³⁺ ion concentration of 0.87 mol/L prepared by dissolving 180 g of a Yb(NO₃)₃·xH₂O powder in 300 mL of distilled water was added, and the resulting aqueous solution was stirred. The Yb³⁺ ion concentration was calculated from analysis results of inductively coupled plasma atomic emission spectrometry (ICP-AES). iCAP7400 Duo manufactured by Thermo Fisher Scientific Inc. was used as an analyzer.

Next, 1.5 equivalents of citric acid monohydrate (manufactured by Kanto Chemical Co., Inc.) and 1.5 equivalents of ethylenediaminetetraacetic acid (EDTA) (manufactured by Kanto Chemical Co., Inc.) with respect to metal cations contained in the aqueous solution were added to the aqueous solution. The aqueous solution was then stirred at 90°C.

Subsequently, the pH of the aqueous solution was adjusted to 7 with aqueous ammonia (28% (by weight)) (manufactured by Kanto Chemical Co., Inc.). After the pH adjustment, the aqueous solution was heated to 95°C to 240°C with a hot stirrer to remove the solvent, thus forming a solid.

The solid was ground in a mortar and was then degreased at approximately 400°C. After the degreasing, the resulting powder was press-formed into a cylindrical shape and was calcined at 900°C for 10 hours in the air. After the calcination, the coarsely ground powder was put into a plastic container together with zirconia balls, and ethanol was added to the powder. The powder was ground in a ball mill for four days or more. After grinding in the ball mill, the solvent was removed by drying with a lamp. Thus, a powder of the electrolyte material was prepared.

### (Preparation of Electrolyte Powder for Green Sheet and Preparation of Green Sheet)

The "(Preparation of Electrolyte Powder)" operation was performed multiple times. Approximately 200 g of an electrolyte powder for a green sheet was prepared in this manner. The powder of the electrolyte material was used to form a green sheet. More specifically, the powder of the electrolyte material, a resin, poly(vinyl butyral), a plasticizer, butyl benzyl phthalate, and solvents, butyl acetate and 1-butanol, were kneaded. Thus, a kneaded product was prepared. The kneaded product was treated by a tape casting method. Thus, a green sheet of the electrolyte was formed.

### [Method for Producing Fuel Electrode Material]

Next, a method for producing a fuel electrode material from BZYb and NiO is described below.

The powder of the electrolyte material produced by the "Method for Producing Electrolyte Material" and a NiO powder (manufactured by Sumitomo Metal Mining Co., Ltd.) were weighed at a weight ratio of NiO:BZYb = 80:20 (that is, the volume ratio of Ni to BZYb is 69:31). The weighed powder of the electrolyte material and the weighed NiO powder were used to form a green sheet. More specifically, the powder of the electrolyte material, the NiO powder, a resin, poly(vinyl butyral), a plasticizer, butyl benzyl phthalate, and solvents, butyl acetate and 1-butanol, were kneaded. Thus, a kneaded product was prepared. The kneaded product was treated by the tape casting method. Thus, a green sheet of the fuel electrode was formed.

### [Method for Producing Layered Body]

First, a method for producing a layered body of a fuel electrode and an electrolyte membrane is described below. The green sheet of the fuel electrode formed by the "Method for Producing Fuel Electrode Material" was cut into a predetermined size so as to form a 20 mm x 20 mm square (with four corners chamfered by 3 mm) after sintering on the assumption that the linear shrinkage rate was 22%. A plurality of the green sheets were stacked. The green sheets of the fuel electrode cut into the predetermined size and stacked were then placed on the green sheet of the electrolyte formed by the "Method for Producing Electrolyte Material" and were hot-pressed at a pressure of 50 MPa to form a layered body.

The layered body was sintered at 1475°C for 2 hours to produce a 20 mm x 20 mm square (with four corners chamfered by 3 mm) half-cell from the layered body of the fuel electrode and the electrolyte membrane. The BZYb constituting the electrolyte membrane was identified to be a single phase by X-ray diffractometry. The SmartLab manufactured by Rigaku Corporation was used for the measurement. The X-ray radiation on a sample was a CuKα characteristic X-ray (wavelength: 1.5418 angstroms).

Next, a method for forming the air electrode on the electrolyte membrane is described below. The powder of each of the air electrode materials according to Examples 1 to 3 and Comparative Examples 1 to 4 prepared by the "Method for Producing Air Electrode Material" was mixed at a predetermined weight ratio with a vehicle containing a mixture of alcohol and ether and was kneaded in a planetary mixer to prepare a paste of the air electrode material. The powder of each of the air electrode materials according to Examples 1 to 3 and Comparative

### Examples 1 to 4 and the vehicle were mixed at a ratio of 3:2 (weight ratio).

Each of the pastes of the air electrode materials according to Examples 1 to 3 and Comparative Examples 1 to 4 was screen printed on the electrolyte membrane of the half-cell as an air electrode with a diameter of 10 mm. Membrane electrode assemblies according to Examples 1 to 3 and Comparative Examples 1 to 4 were produced by sintering at 950°C for 2 hours in the air. The thicknesses of the electrolyte membrane, air electrode, and fuel electrode of the membrane electrode assemblies according to Examples 1 to 3 and Comparative Examples 1 to 4 were 13 µm , 10 µm , and 0.6 mm, respectively.

### (Measurement of Reaction Resistance of Membrane Electrode Assembly)

Subsequently, the reaction resistance of the membrane electrode assemblies according to Examples 1 to 3 and Comparative Examples 1 to 4 was measured. The measurement was alternating-current impedance measurement by a four-terminal method, as described below.

A Ag mesh for collecting current was bonded with a Ag paste to the surfaces of the fuel electrode and the air electrode of each of the membrane electrode assemblies according to Examples 1 to 3 and Comparative Examples 1 to 4. Two Pt wires were connected to the Ag mesh on each of the fuel electrode side and the air electrode side as external output terminals for four-terminal measurement.

First, the membrane electrode assembly was heated to 700°C. Humidified air containing 3% of water vapor was supplied to the air electrode, and humidified hydrogen containing 3% of water vapor was supplied to the fuel electrode. The membrane electrode assembly was held for 4 hours or more to reduce NiO in the mixture of NiO and BZYb of the fuel electrode to Ni.

After the reduction operation of the membrane electrode assembly, the resistance measurement was performed at 600°C while humidified air containing 3% (by volume) of water vapor was supplied to the air electrode and humidified hydrogen containing 3% of water vapor was supplied to the fuel electrode. ModuLab XM manufactured by Solartron was used for the alternating-current impedance measurement. An alternating current was applied by changing the frequency from 100 kHz to 0.01 Hz at an amplitude of 10 mV with respect to the terminal voltage at an external current of 0 A.

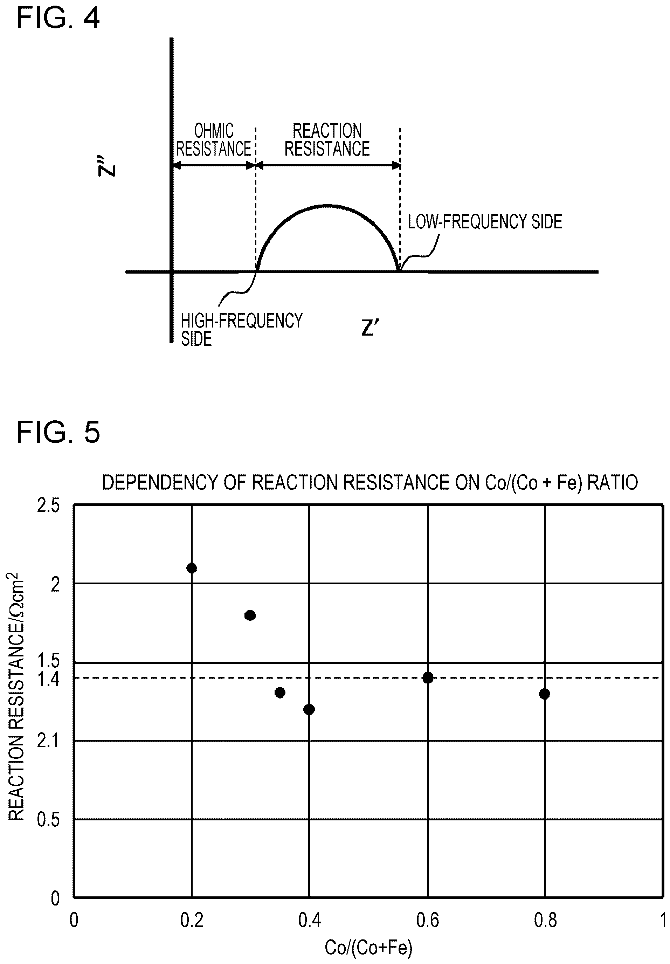

Fig. 4 is a Cole-Cole plot of an example of the alternating-current impedance measurement in an example of the present disclosure. Fig. 4 schematically shows resistance components in the alternating-current impedance measurement. As illustrated in Fig. 4, the result of the alternating-current impedance measurement can be illustrated by the Cole-Cole plot in which the real component Z' of the impedance Z (= Z' + jZ") is plotted on the horizontal axis and the imaginary component Z" is plotted on the vertical axis. In the Cole-Cole plot, the reaction resistance is the length of the chord between the arc drawn in the frequency range of approximately 10 kHz to 0.01 Hz and the real axis (Z'), that is, the length between two intersection points at which the arc crosses the real axis. Table 1 shows the reaction resistance results obtained by the measurement.

Fig. 5 shows the relationship between the mole ratio of Co to the sum of the numbers of moles of Co and Fe and the reaction resistance. Fig. 5 is a graph showing the relationship between the mole ratio of Co to the sum of the numbers of moles of Co and Fe and reaction resistance at the air electrodes according to Examples 1 to 3 and Comparative Examples 1 to 4 of the present disclosure. In Fig. 5, the vertical axis represents the reaction resistance (unit: Ωcm²), and the horizontal axis represents the ratio of Co to the sum of the numbers of moles of Co and Fe of the air electrode.

Table 1 and Fig. 5 show that the reaction resistance was 1.4 Ωcm² or less when the mole ratio of Co to the sum of the numbers of moles of Co and Fe in the air electrode material (LSCF) was 0.35 or more (the air electrodes according to Examples 1 and 2 and the air electrode according to Comparative Example 3). Thus, when the membrane electrode assembly is used in a solid oxide fuel cell, the voltage is not lower than 0.7 V, which is set as the minimum voltage of the voltage actually obtained during the operation of the solid oxide fuel cell.

By contrast, when the mole ratio of Co to the sum of the numbers of moles of Co and Fe in the air electrode material (LSCF) was 0.2 or 0.3 (the air electrodes according to Comparative Examples 1 and 2), the reaction resistances were 2.1 and 1.8 cm², respectively, which were significantly higher than those of the air electrodes according to Examples 1 and 2 and exceeded 1.4 Ωcm².

Consequently, when the mole ratio of Co to the sum of the numbers of moles of Co and Fe in the air electrode material (LSCF) is 0.35 or more, the reaction resistance of the membrane electrode assembly can be decreased. Thus, when a membrane electrode assembly in which the mole ratio of Co to the sum of the numbers of moles of Co and Fe in the air electrode material (LSCF) is 0.35 or more is used in a solid oxide fuel cell, high power generation efficiency can be achieved.

As shown in Table 1, a membrane electrode assembly in which the mole ratio of Co to the sum of the numbers of moles of Co and Fe in the air electrode material (LSCF) is 0.6 or less was confirmed to have high stability against water vapor.

These results show that a membrane electrode assembly in which the mole ratio of Co to the sum of the numbers of moles of Co and Fe in the air electrode material (LSCF) is 0.35 or more and 0.6 or less has both high reaction efficiency and high stability against water vapor.

### Industrial Applicability

A membrane electrode assembly according to the present disclosure can be used in electrochemical devices, such as solid oxide fuel cells, water electrolysis cells, and steam electrolysis cells.

### Reference Signs List

- 10: membrane electrode assembly
- 11: electrolyte membrane
- 12: air electrode
- 13: fuel electrode
- 100: membrane electrode assembly

## Claims

1. A membrane electrode assembly comprising:
an electrolyte membrane containing a proton conductive oxide; and
an electrode containing a lanthanum strontium cobalt iron composite oxide located on the electrolyte membrane,
wherein, in the electrode, the ratio of the number of moles of cobalt to the sum of the number of moles of cobalt and the number of moles of iron is 0.35 or more and 0.6 or less.

2. The membrane electrode assembly according to Claim 1, wherein the electrolyte membrane is in contact with the electrode.

3. The membrane electrode assembly according to Claim 1 or 2, wherein
the electrolyte membrane contains at least one compound selected from the group consisting of BaZr₁₋ₓ₁M1ₓ₁O_{3-γ}, BaCe₁₋ₓ₂M2ₓ₂O_{3-γ}, and BaZr_{1-x3-y3}Ceₓ₃M3_{y3}O_{3-γ},
wherein M1, M2, and M3 independently denote at least one element selected from the group consisting of La, Pr, Nd, Pm, Sm, Eu, Gd, Tb, Dy, Ho, Er, Tm, Yb, Y, Sc, Mn, Fe, Co, Ni, Al, Ga, In, and Lu,
x1 satisfies 0 < x1 < 1,
x2 satisfies 0 < x2 < 1,
x3 satisfies 0 < x3 < 1,
y3 satisfies 0 < y3 < 1, and
γ satisfies 0 < γ ≤ 0.5.

4. The membrane electrode assembly according to Claim 3, wherein the electrolyte membrane is a compound represented by BaZr₁₋ₓ₁Ybₓ₁O_{3-γ}.

5. The membrane electrode assembly according to any one of Claims 1 to 4, wherein the electrode is an air electrode.

6. A solid oxide fuel cell comprising the membrane electrode assembly according to any one of Claims 1 to 5.

7. An electrochemical device comprising the membrane electrode assembly according to any one of Claims 1 to 5.
